(19)

Europäisches
Patentamt

European
Patent Office

Office européen
des brevets

(11) **EP 4 096 044 A1**

(12) **EUROPEAN PATENT APPLICATION**

(43) Date of publication:
**30.11.2022 Bulletin 2022/48**

(21) Application number: **22161821.8**

(22) Date of filing: **14.03.2022**

(51) International Patent Classification (IPC):
*H02J 3/06* (2006.01)        *H02J 3/38* (2006.01)
*H02J 3/48* (2006.01)        *H02J 3/46* (2006.01)
*H02J 3/00* (2006.01)        *G05B 15/02* (2006.01)
*H01M 8/04298* (2016.01)      *H02J 3/32* (2006.01)

(52) Cooperative Patent Classification (CPC):
**H02J 3/06; G05B 15/02; H01M 8/04298;**
**H02J 3/003; H02J 3/004; H02J 3/381; H02J 3/466;**
H02J 3/32; H02J 2203/10; H02J 2300/20;
H02J 2300/30; H02J 2300/40; H02J 2310/12

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.05.2021  JP 2021090318**

(71) Applicant: **Hitachi, Ltd.**
**Tokyo 100-8280 (JP)**

(72) Inventors:
• **HASEGAWA, Hiroaki**
**Tokyo, 100-8280 (JP)**

• **ISHIKAWA, Takao**
**Tokyo, 100-8280 (JP)**
• **SHIRAKAWA, Yuzo**
**Tokyo, 100-8280 (JP)**
• **NISHIDE, Akinori**
**Tokyo, 100-8280 (JP)**
• **FURUTA, Futoshi**
**Tokyo, 100-8280 (JP)**
• **WATANABE, Keiji**
**Tokyo, 100-8280 (JP)**

(74) Representative: **Mewburn Ellis LLP**
**Aurora Building**
**Counterslip**
**Bristol BS1 6BX (GB)**

(54) **ENERGY MANAGEMENT APPARATUS, ENERGY MANAGEMENT SYSTEM AND ENERGY MANAGEMENT METHOD**

(57)     An energy management apparatus manages energy of facilities, has a processor and a storage device and is capable of accessing a control device which controls a cogeneration device which supplies power to a power loading device in each of the facilities and heat to a heat loading device in the facility, wherein the processor acquires a power-generation plan based on time-series power demand in each of the facilities and a time-series power-generation amount of the cogeneration device; and controls the control device of a first facility so that at least one of stop of the cogeneration device of the first facility in the facilities, charging of a secondary cell in the first facility, and power supply to the power loading device of a second facility in the facilities from the cogeneration device of the first facility is performed during a control target period on the basis of the power-generation plan.

FIG.1

EP 4 096 044 A1

**Description**

CLAIM OF PRIORITY

The present application claims priority from Japanese patent application JP 2021-90318 filed on May 28, 2021, the content of which is hereby incorporated by reference into this application.

BACKGROUND

The present invention relates to an energy management apparatus, energy management system, and an energy management method for managing energy.

Conventionally, there has been an energy system including a cogeneration facility such as the following JP 2018-042420 A to JP 2002-070647 A. An energy management apparatus in JP 2018-042420 A, for example, is an apparatus for managing a power generation amount from a cogeneration facility and a supply heat amount from a heat accumulation facility and includes a load predicting unit which predicts load power and a load heat amount at each predetermined time, an operation-priority deciding unit which decides any one of a first mode in which power generation takes priority, a second mode in which the power generation amount is determined in accordance with a heat accumulation amount, and a third mode in which power purchase takes priority, on the basis of a power generation price corresponding to the load power and the load heat amount predicted by the load predicting unit, a heat recovery price, and a power purchase price, a power-generation amount deciding unit which decides a power generation amount at each predetermined time in accordance with a decision result of any one of the first to third modes by the operation-priority deciding unit, and a supply heat-amount deciding unit which decides a supply heat amount on the basis of a predicted heat accumulation amount at each predetermined time.

Moreover, the power supply system of JP 2015-103275 A is a power supply system which supplies power from a fuel cell and the power accumulating device to a load, and the fuel cell changes a power generation state to either one of a maximum power-generation state where the maximum generation power is generated and a power-generation stop state where the power generation is stopped in accordance with charging/discharging of the power accumulating device, and when the fuel cell is in the maximum power-generation state, if a state in which power consumption of the load is at the maximum generation power or less of the fuel cell continues for a predetermined period of time, the fuel cell is brought into the power-generation stop state.

Furthermore, an energy supply system of JP 2002-070647 A has first and second cogeneration apparatuses, first and second steam accumulators, and first and second gas boilers provided, in each of first and second areas capable of individually grasping a power demand amount and a heat demand amount, sends/receives the power generated in the first and second cogeneration apparatuses between the both areas A1 and A2 by power-transmission lines, and controls driving by calculating operation rates of the first and second cogeneration apparatuses on the basis of the power demand amount and heat demand amount grasped in a database 7, the heat accumulation amount in the first and second steam accumulators, and power-generation efficiency of the first and second cogeneration apparatuses.

SUMMARY

In order to promote CO2 emission reduction of the entire society, prompt realization of a "hydrogen society" which enables storage and distribution of energy by using renewable energy for hydrogen manufacture, along with decarbonization of energy supply sources, is in demand. At this time, realization and spread of an art of efficient utilization of hydrogen is a problem.

For example, since consumption of fossil fuel for heat-source applications holds a large share in cold regions, such a gap between use of fluctuating renewable power as an energy source and driving of a heat source operating at all times needs to be filled. Specifically, two problems, that is, "energy conversion from electricity to heat" and "time shift from renewable-energy supply peak to heat-demand peak" need to be solved at the same time. In the hydrogen society, achievement thereof is considered to be possible by combining hydrogen manufacture from renewable energy and distributed-type cogeneration at consumers' facilities.

However, demand and supply could be mismatched due to supply of power and a heat source with independent infrastructures in some cases. For example:

(1) Fluctuating renewable energy becomes excessive during daytime, while power consumption is large in the evening.
(2) Gas consumption in winter is large.

Moreover, the distributed power supply by a fuel cell or particularly SOFC (Solid Oxide Fuel Cell) has characteristics of a highly efficient power-generation operation, a high-temperature heat source at approximately 700°C, a heat-to-power ratio adjustment function, handling of not only 100% hydrogen but multiple fuels including hydrocarbons such as methane, ethanol and the like. As described above, the SOFC has desirable characteristics for smooth transition from a natural gas infrastructure to a hydrogen infrastructure while avoiding excessive investment.

On the other hand, as technical restrictions, adjustment of the heat-to-power ratio has limitation, and preheating to a sufficiently high temperature (600°C or above) is needed for start of power generation. Moreover, constitution by ceramic materials such as YSZ (Yttria Stabilized Zirconia) causes susceptibility to rapid temperature rise or cooling, which is a problem in application to cogeneration.

As a result, if fluctuation in the energy demand is large, either one of heat or power becomes excessive. For example, assuming that power demand per family unit in a residence is 4 MWh/day and the heat demand is 15 MWh/day, power tends to be in excess in time slots during which residents are absent. On the other hand, if the power demand is to be met, heat supply runs short, while if the heat demand is to be met, power becomes excessive.

Moreover, it is difficult to stop the fuel cell in some cases, and an operation thereof is difficult. For example, in the case of SOFC, 8 to 24 hours are needed for preheating to an operation temperature (700°C) from a room temperature, and rapid heating cannot be realized. Furthermore, since deterioration is accumulated by repeated operation stop (several thousand times is the limit), a continuous operation without fluctuation is desirable.

The present invention has an object to suppress stop and restart of a fuel cell.

An energy management apparatus which is an aspect of the disclosure in the present application is configured to manage energy of a plurality of facilities, having a processor configured to execute a program and a storage device configured to store the program and capable of accessing a control device configured to control a cogeneration device which supplies power to a power loading device in each of the plurality of facilities and supplies heat to a heat loading device in the facility, wherein the processor is configured to: acquire a power-generation plan based on time-series power demand in each of the facilities and a time-series power-generation amount of the cogeneration device; and control the control device of a first facility so that at least one of stop of the cogeneration device of the first facility in the plurality of facilities, charging of a secondary cell in the first facility, and power supply to the power loading device of a second facility in the plurality of facilities from the cogeneration device of the first facility is performed during a control target period on the basis of the power-generation plan.

According to a typical embodiment of the present invention, stop and restart of a fuel cell can be suppressed. Other features, aspects, and advantages of the subject matter will become apparent from the description, the drawings, and the claims.

## BRIEF DESCRIPTION OF THE DRAWINGS

FIG. 1 is a block diagram illustrating a system configuration example of an energy system.
FIG. 2 is a block diagram for illustrating a hardware configuration example of each of computers.
FIG. 3 is an explanatory diagram (No. 1) illustrating graphs of changes over time of a power demand peak.
FIG. 4 is an explanatory diagram (No. 2) illustrating graphs of changes over time of a power demand peak.
FIG. 5 is an explanatory diagram illustrating an operation example 1 of the energy management system.
FIG. 6 is an explanatory diagram illustrating an operation example 2 of the energy management system.
FIG. 7 is an explanatory diagram illustrating an operation example 3 of the energy management system.
FIG. 8 is an explanatory diagram illustrating an operation example 4 of the energy management system.
FIG. 9 is an explanatory diagram illustrating an operation example 5 of the energy management system.
FIG. 10 is a timing chart illustrating the operation of the fuel cell.
FIG. 11 is a flowchart (first half) illustrating an example of energy management processing procedure by the energy management system.
FIG. 12 is a flowchart (second half) illustrating an example of the energy management processing procedure by the energy management system.

## DETAILED DESCRIPTION OF THE EMBODIMENTS

An energy management system is a system for managing energy of a distributed heat source mainly constituted by a fuel cell which would become prospective means of distributed-type cogeneration. In this energy management system with a constitution in which a plurality of fuel cells and power loads (or secondary cells) are present under a distribution network 104, under such a situation that a power load of a facility in a demand sector is reduced, power is supplied to a load in another demand sector and charges the secondary cell and if stop is unavoidable by all means, the fuel cell is stopped alternately with a fuel cell in another facility in the same or different demand sector so as to avoid frequent stop or restart of the fuel cell. The demand sector is a group of facilities with common demand profiles.

The demand profile includes a peak of the power demand and a position of the facility, for example. For example, a facility group with peak time slots in common and in the same area belong to the same demand sector. Note that the power load may be a stationary power generator in a city block or may be railways, hybrid vehicles (EV), and fuel cell vehicles (FCV), for example.

By means of this energy management system, operation states such as frequent start/stop, long-time operation with a high load and the like that can easily deteriorate the fuel cell can be avoided by operation control by a linkage of a plurality of units. Moreover, electrode degradation and a thermal shock by rapid heating can be avoided as fluctuation of a load is suppressed.

Note that, in the energy management system, by taking device characteristics themselves of the SOFC as given, for example, rational operation is performed by the energy management system. Targets for introducing the energy management system are regions not suitable for introduction of a thermal grid, though power and city gas have been widespread as urban infrastructure, for example.

Moreover, heat can be used only at the site. Steam piping or hot-water piping has a large heat loss and can be realized only at a small area such as inside a building or a land with high population density. For example, the heat loss exceeds 20%, if heat-demand line density (size of the heat demand per piping length) is 0.5 MWh/m·year or less. If the heat-demand line density or heat demand density is low, it is more advantageous to deliver gas or power and to convert it to heat at the site and moreover, since a thermal time constant of a building is extremely long in general, it is desirable not to stop heat supply of heating.

On the other hand, power can be interchanged between demand sectors via the distribution network. For example, since power demand is larger in the service business during the daytime while larger in residences in the evening, such a time difference in the power peak between the demand sectors as above can be utilized. If the power excess cannot be fully absorbed between the demand sectors, it can be used for charging of electric vehicles (EV) so that power demand can be increased. Moreover, if there are electric water heaters and heat pumps, heat can be also accumulated by operating them. Hereinafter, the energy management system according to this embodiment will be described by using the attached drawings.

\<Energy system\>

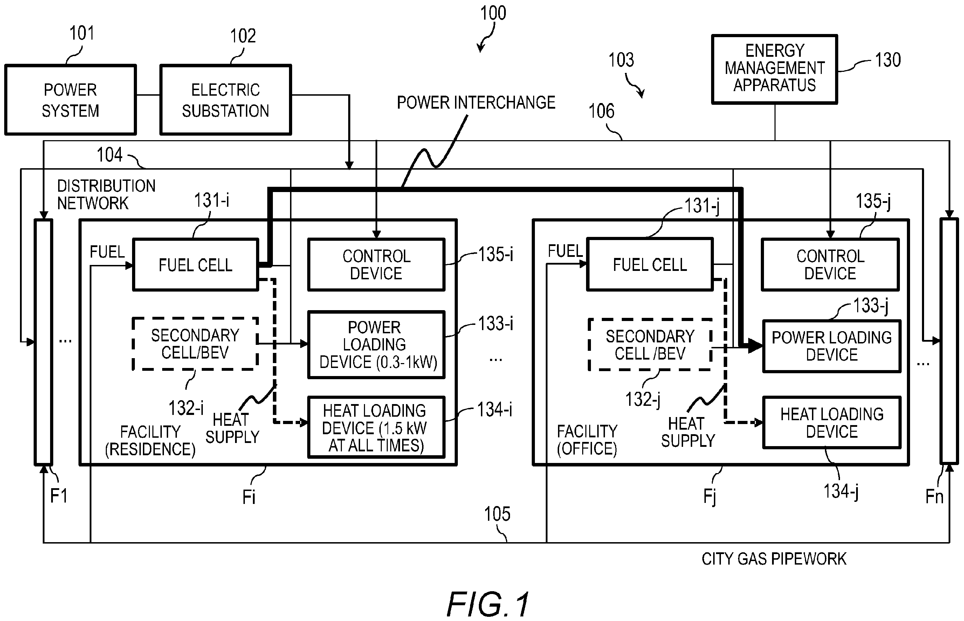

FIG. 1 is a block diagram illustrating a system configuration example of an energy system. The energy system 100 is constituted by a power system 101 which is a power supply source, an electric substation 102, and an energy management system 103, for example. The energy management system 103 is constituted by an energy management apparatus 130 and an energy facility group in a plurality of facilities F1 to Fn. In FIG. 1, there are facilities Fi and Fj (i is an integer satisfying $1 \leq i \leq n$, j ($\neq i$) is an integer satisfying $1 \leq j \leq n$, and n is an integer equal to or larger than 2.) as the plurality of facilities F1 to Fn as an example. Note that, as an example, here, the facility Fi and the facility Fj belong to different sectors. For example, the facility Fi is a residence in a residential town, while the facility Fj is an office in a commercial area.

An energy management apparatus 130 integrally controls power interchange and heat supply of control devices 135-i and 135-j through a network 106 such as the Internet, LAN (Local Area Network), WAN (Wide Area Network) and the like.

The facility Fi has a fuel cell 131-i, which is a heat-source supply device, a secondary cell 132-i, a power loading device 133-i, and a heat loading device 134-i. Similarly, the facility Fj has a fuel cell 131-j, which is a heat-source supply device, a secondary cell 132-j, a power loading device 133-j, and a heat loading device 134-j. If the facilities Fi and Fj are not discriminated, it is noted simply as the facility F. Moreover, if the fuel cell 131-i and the fuel cell 131-j, the secondary cell 132-i and the secondary cell 132-j, the power loading device 133-i and the power loading device 133-j, the heat loading device 134-i and the heat loading device 134-j, and the control device 135-i and the control device 135-j are not discriminated, their branch numbers are omitted, and they are noted as the fuel cell 131, the secondary cell 132, the power loading device 133, the heat loading device 134, and the control device 135.

The fuel cell 131 is a cell which generates power by taking out power from chemical energy of a fuel (gas) supplied from a city gas pipework 105 or a fuel tank by electrochemical reactions. As a fuel, hydrogen, hydrocarbons (methane or propane, for example) or alcohol can be employed, for example. The fuel cell 131 is connected to the city gas pipework 105, the distribution network 104, and the heat loading device 134 in its own facility F. The fuel cell 131 can supply power to the power loading device 133 in its own facility F or another facility F and can also supply heat to the heat loading device in its own facility F. Another facility F may be a facility in the same demand sector or a facility in a different demand sector.

FIG. 1 shows an example in which power is supplied from the fuel cell 131-i of the facility Fi to the power loading device 133-j of the facility Fj, heat is supplied from the fuel cell 131-i of the facility Fi to the heat loading device 134-i of the facility Fi, and the heat is supplied from the fuel cell 131-j of the facility Fj to the heat loading device 134-j of the facility Fj.

The secondary cell 132 is a cell which can be repeatedly used by charging. The secondary cell 132 may be a secondary-cell type electric vehicle (BEV). The secondary cell 132 is connected to the distribution network 104.

The power loading device 133 is equipment which is operated by power supply and falls under air-conditioning equipment, home electrical appliances, lighting equipment, and security equipment. The power loading device 133-i of the facility Fi is supposed to be operated by consuming power of 0.3 to 1 kW, for example.

The heat loading device 134 is equipment which is operated by using the heat supply by waste heat of the fuel cell 131 and falls under a water heater and heating equipment, for example. The heat loading device 134-i of the facility Fi is assumed to be operated by consuming power of 1.5 kW at all times, for example.

The control device 135 controls power interchange and heat supply in the facility F and provides power to another facility F in compliance with an instruction from the energy management apparatus 130.

The power from the power system 101 is supplied to the fuel cell 131, the secondary cell 132, and the power loading device 133 of each facility by the distribution network 104 via the electric substation 102. The fuel from a heat supply source is supplied to the fuel cell 131 through the city gas pipework 105.

<Hardware Configuration Example of Computer>

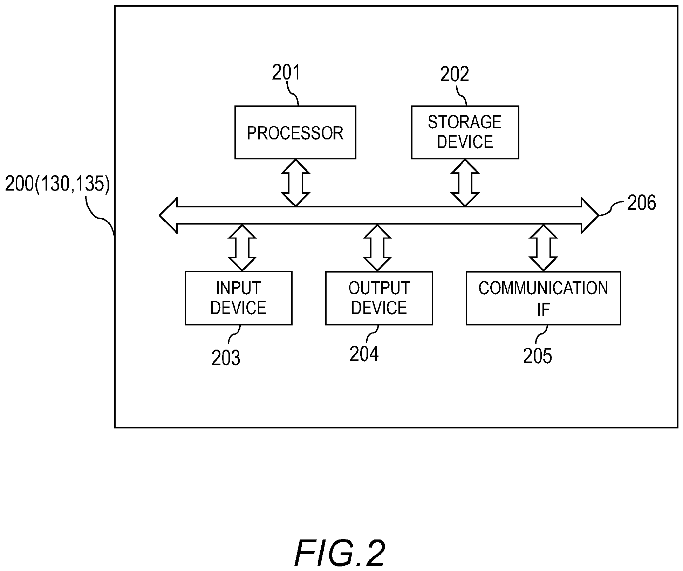

FIG. 2 is a block diagram for illustrating a hardware configuration example of each of computers (the energy management apparatus 130 and the control device 135). A computer 200 includes a processor 201, a storage device 202, an input device 203, an output device 204, and a communication interface (communication IF) 205. The processor 201, the storage device 202, the input device 203, the output device 204, and the communication IF 205 are coupled to one another through a bus 206. The processor 201 is configured to control the computer 200. The storage device 202 serves as a work area for the processor 201. The storage device 202 is also a non-transitory or transitory recording medium configured to store various programs and various kinds of data. Examples of the storage device 202 include a read only memory (ROM), a random access memory (RAM), a hard disk drive (HDD), and a flash memory. The input device 203 is configured to input data. Examples of the input device 203 include a keyboard, a mouse, a touch panel, a numeric keypad, a scanner and a microphone. The output device 204 is configured to output data. Examples of the output device 204 include a display, a printer, and a speaker. The communication IF 205 is coupled to the network 110, and is configured to transmit and receive data.

<Time difference in power demand peak between different demand sectors>

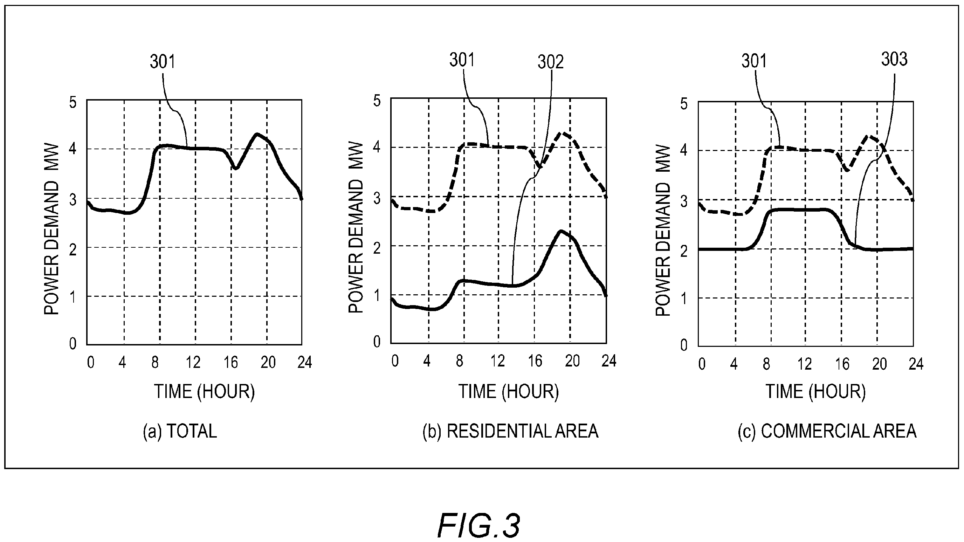

FIG. 3 is an explanatory diagram (No. 1) illustrating graphs of changes over time of a power demand peak. Here, as different demand sectors, a residential area and a commercial area in the same region are used as examples. The graph (a) shows a synthesized waveform 301 in which a waveform 302 of a change over time of the power demand peak in the residential area and a waveform 303 of the change over time of the power demand peak in the commercial area are added together. The graph (b) shows the waveform 302 of the change over time in the power demand peak in the residential area. The graph (c) shows the waveform 303 of the change over time of the power demand peak in the commercial area.

By referring to the graphs (b) and (c), there is a difference in the power demand peak between the different demand sectors. With a life cycle of area residents in the facility Fi in the residential area, the power demand in each hour fluctuates. Moreover, during the daytime, the power demand in the facility Fj in industries and the service business rises, while the power demand in the facility Fi in the residential area rises in time slots from evening to night and thus, the waveforms 302 and 303 are complementary curves. During the nighttime, there is a tendency that the entire power demand lowers both in the facility Fi in the residential area and the facility Fj in the commercial area.

In view of the power demand of the entire area by the synthesized waveform in the graph (a), though there is some irregularity, the power demand peaks are averaged. In a case as shown in FIG. 3, the peak can be handled by interchanging the power between the facilities in the area, which only needs introduction of a small capacity of a cogeneration facility.

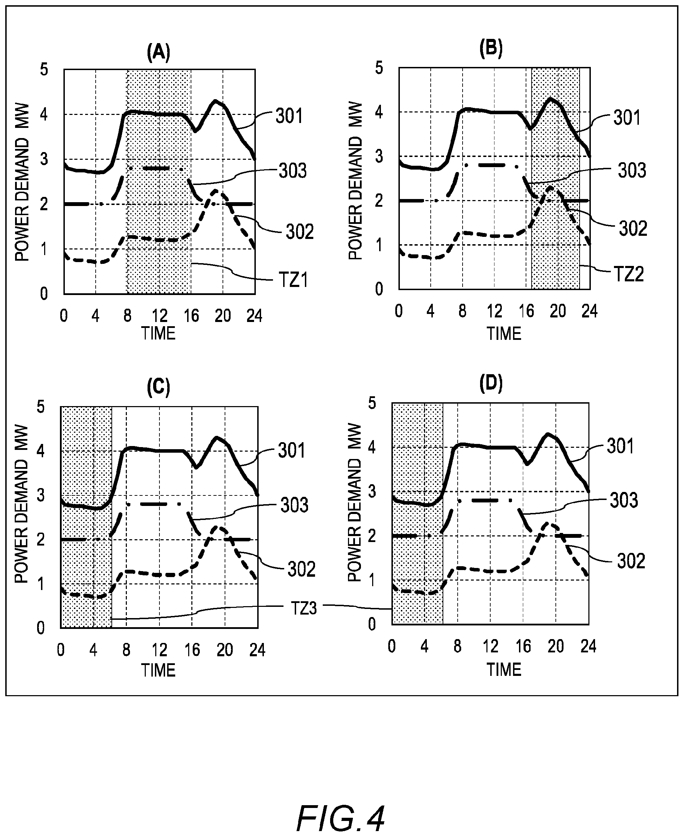

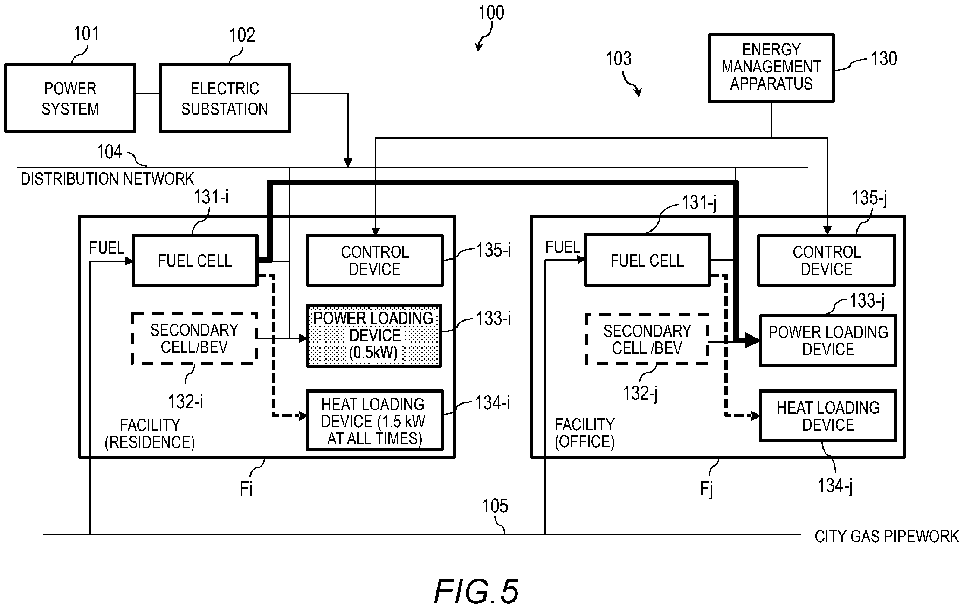

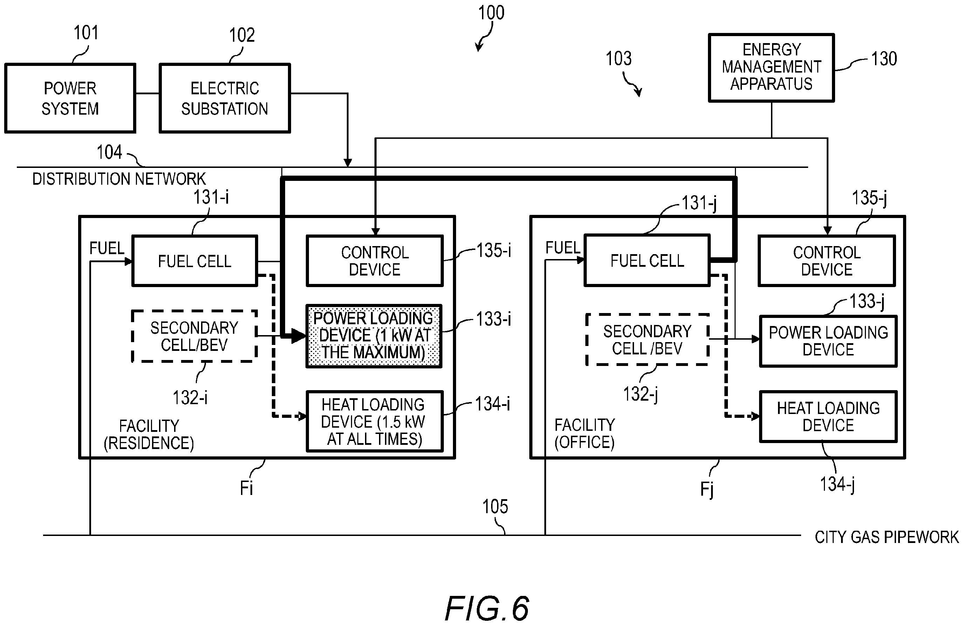

FIG. 4 is an explanatory diagram (No. 2) illustrating graphs of changes over time of a power demand peak. Operations of the energy management system 103 in hatched time slots are shown in FIG. 5 to FIG. 9. For example, a time slot TZ1 during daytime in (A) is a time slot when the power demand in the commercial area reaches a peak, and the operation of the energy management system 103 in the time slot TZ1 will be described later in FIG. 5. A time slot TZ2 from evening to night in (B) is a time slot when the power demand in the residential area reaches a peak, and the operation in the time slot TZ2 will be described later in FIG. 6. The operations of the energy management system 103 in a time slot TZ3 at midnight in (C) and (D) will be described later in FIG. 6.

<Operation Example of Energy Management System 103>

By using FIG. 5 to FIG. 9, the operations of the energy management system 103 in the time slots TZ1 to TZ3 shown in FIG. 4 will be described. In FIG. 5 to FIG. 9, the facility Fi (residence) in the residential area and the facility Fj (office) in the commercial area will be described as examples.

FIG. 5 is an explanatory diagram illustrating an operation example 1 of the energy management system 103. FIG. 5 illustrates the operation example of the energy management system 103 in the time slot TZ1 in (A) in FIG. 4. The energy management apparatus 130 executes control so that the control device 135-i behaves as follows. Note that the fuel cells 131-i and 131-j are assumed to supply heat to the heat loading devices 134-i and 134-j, respectively.

It is assumed that the energy management apparatus 130 designates the fuel cell 131-i of the facility Fi (residence) in the residential area as an interchange source of power and designates the power loading device 133-j of the facility Fj (office) in the commercial area where the power demand reaches the peak in the time slot TZ1 as an interchange destination of power. In this case, when a power load of the power loading device 133-i in its own facility Fi falls to a threshold value or less in the time slot TZ1, the control device 135-i supplies power to the power loading device 133-j of the facility Fj from the fuel cell 131-i in its own facility Fi. As a result, the power can be provided to the facility Fj which has the power demand peak in the time slot TZ1 from the facility Fi which has no power demand peak in the time slot TZ1.

FIG. 6 is an explanatory diagram illustrating an operation example 2 of the energy management system 103. FIG. 6 illustrates the operation example of the energy management system 103 in the time slot TZ2 in (B) in FIG. 4. The energy management apparatus 130 executes control so that the control device 135-j behaves as follows. Note that the fuel cells 131-i and 131-j are assumed to supply heat to the heat loading devices 134-i and 134-j, respectively.

It is assumed that the energy management apparatus 130 designates the fuel cell 131-j of the facility Fj (office) in the commercial area as an interchange source of power and designates the power loading device 133-i of the facility Fi (residence) in the residential area where the power demand reaches the peak in the time slot TZ2 as the power interchange destination. In this case, when a power load of the power loading device 133-j in its own facility Fj falls to the threshold value or less in the time slot TZ2, the control device 135-j supplies power to the power loading device 133-i of the facility Fi from the fuel cell 131-j in its own facility Fj. As a result, the power can be provided to the facility Fi which has the power demand peak in the time slot TZ2 from the facility Fj which has no power demand peak in the time slot TZ2.

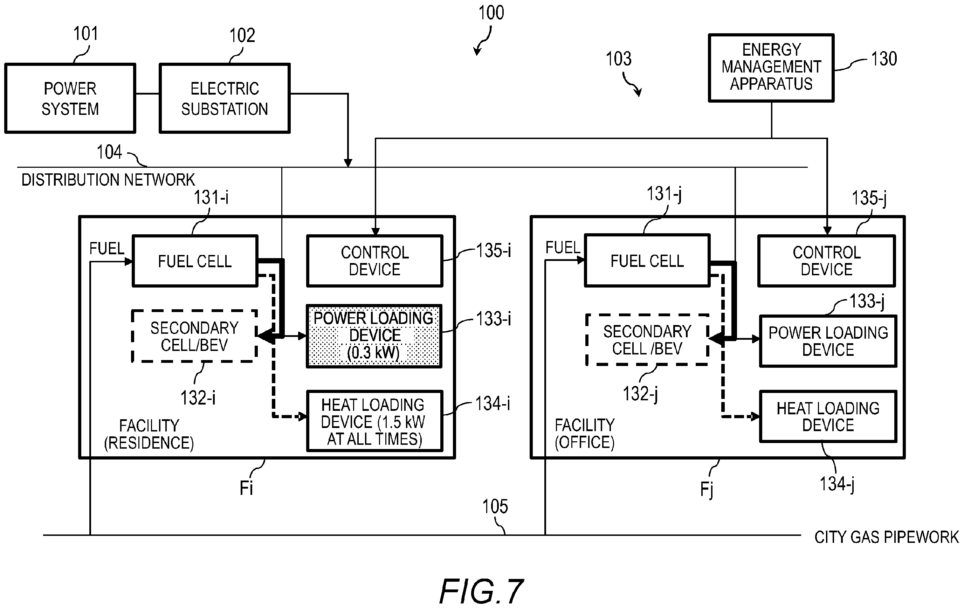

FIG. 7 is an explanatory diagram illustrating an operation example 3 of the energy management system 103. FIG. 7 illustrates the operation example of the energy management system 103 in the time slot TZ3 in (C) in FIG. 4. The energy management apparatus 130 executes control so that the control devices 135-i and 135-j behave as follows. Note that the fuel cells 131-i and 131-j are assumed to supply heat to the heat loading devices 134-i and 134-j, respectively.

If the power load of the power loading device 133-i in its own facility Fi falls to the threshold value or less in the time slot TZ3 when there is no power demand peak, the control device 135-i of the facility Fi (residence) in the residential area charges the secondary cell 132-i from the fuel cell 131-i in its own facility Fi. Similarly, if the power load of the power loading device 133-j in the own facility Fj in the time slot TZ3 when there is no power demand peak falls to the threshold value or less, the control device 135-j charges the secondary cell 132-j from the fuel cell 131-j in its own facility Fj. By charging the secondary cell in the time slot other than the power demand peak as above, preparation can be made for the subsequent power demand peak. Moreover, by using the fuel cell 131 continuously, frequent stop and restart of the fuel cell 131 are reduced, and deterioration of the fuel cell 131 can be suppressed.

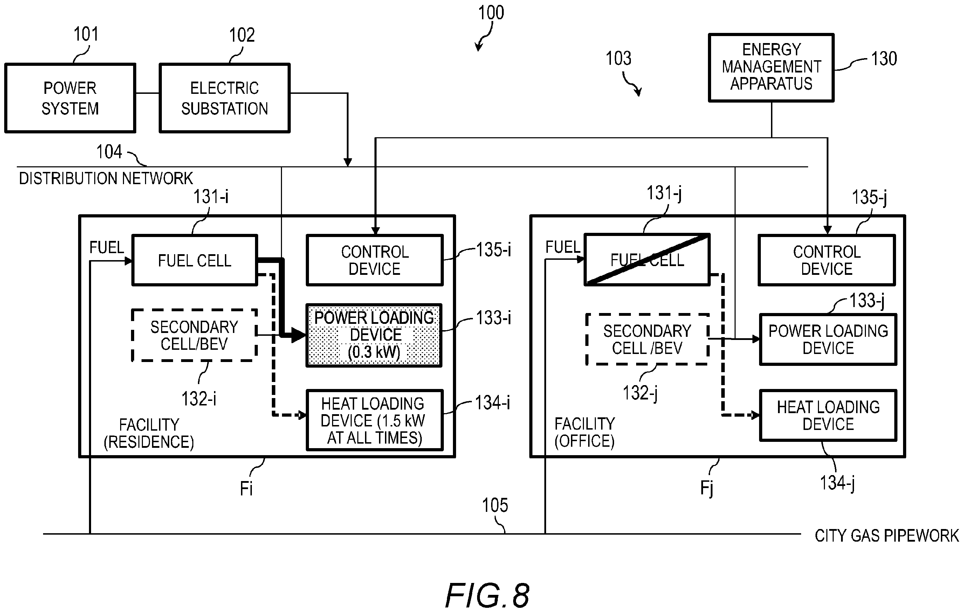

FIG. 8 is an explanatory diagram illustrating an operation example 4 of the energy management system 103. FIG. 8 is the operation example of the energy management system 103 in the time slot TZ3 in (C) in FIG. 4 and illustrates a subsequent state of the operation example in FIG. 7, for example. The energy management apparatus 130 executes control so that the control devices 135-i and 135-j behave as follows, if the secondary cell 132 is not needed (fully charged or not present) in the time slot TZ3.

It is assumed that the energy management apparatus 130 calculates a power unneeded period for each facility F and designates the fuel cell 131-j of the facility Fj (office) in the commercial area as a stop target. The power unneeded period is a period in which the power demand (that is, a power-generation plan amount) falls to a predetermined power demand threshold value or less. If the predetermined power demand threshold value is 1 MW, for example, the time slot TZ3 in (C) in FIG. 4 is the power unneeded period.

In this case, the energy management apparatus 130 draws up a restart plan according to a period length of the power unneeded period in advance and notifies it to the control device 135-j, and the control device 135-j of the facility Fj (office) in the commercial area executes control so that the fuel cell 131-j is stopped in compliance with the restart plan P1.

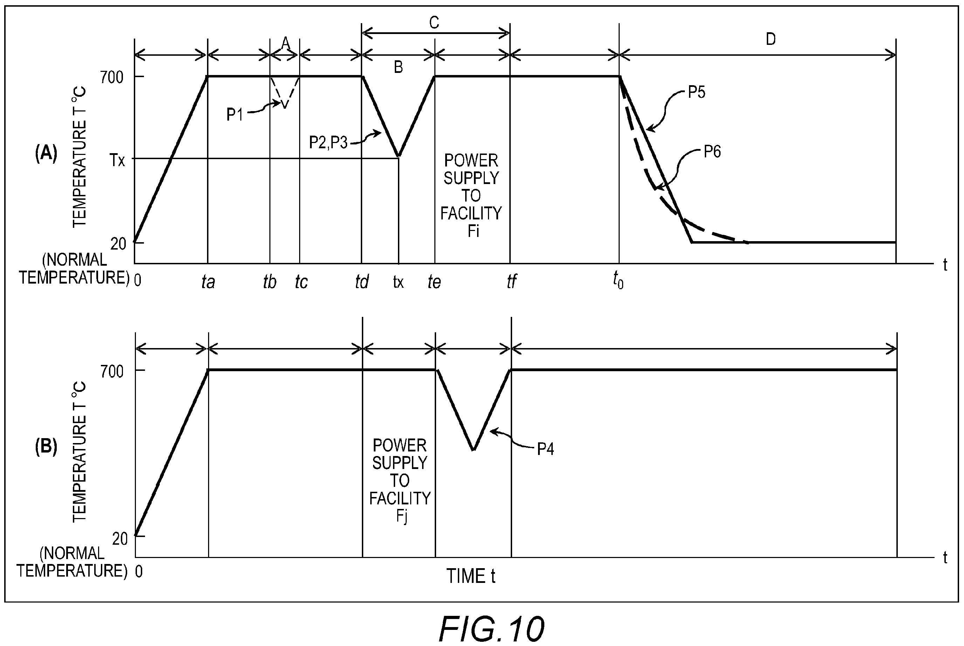

Specifically, if the power unneeded period (A in FIG. 10, which will be described later, for example) in the facility Fj is equal to or less than a first predetermined time TH1, the control device 135-j executes control so that the fuel cell 131-j performs a heat-retaining operation in compliance with the restart plan P1, for example. The heat-retaining operation is a power-generation stop method of operating the fuel cell 131 without allowing it to generate power. The first predetermined time TH1 is time set in advance and 6 hours, for example.

Moreover, if the power unneeded period (B in FIG. 10, for example) in the facility Fj is longer than the first predetermined time TH1 and equal to or less than a second predetermined time TH2, the control device 135-j stops the operation of the fuel cell 131-j (power generation is stopped) in compliance with a restart plan P2. In this case, the control device 135-j restarts the fuel cell 131-j before the power unneeded period has elapsed so that a steady operation at 700°C is resumed after the elapse of the power unneeded period. The second predetermined time TH2 is time set in advance and 12 hours, for example.

Furthermore, if the power unneeded period (C in FIG. 10, which will be described later, for example) in the facility Fj is longer than the second predetermined time TH2 and equal to or less than a third predetermined time TH3, the control device 135-j stops the operation of the fuel cell 131-j in compliance with a restart plan P3. This restart plan P3 is a plan in which the fuel cell 131-j is restarted by using residual heat after the operation stop of the fuel cell 131-j. In this case, if power is needed in the facility Fj during the operation stop of the fuel cell 131-j, the energy management apparatus 130 executes control so that power is provided from the secondary cell of the facility Fj or the fuel cell (alternative for stopped device) of the adjacent facility F.

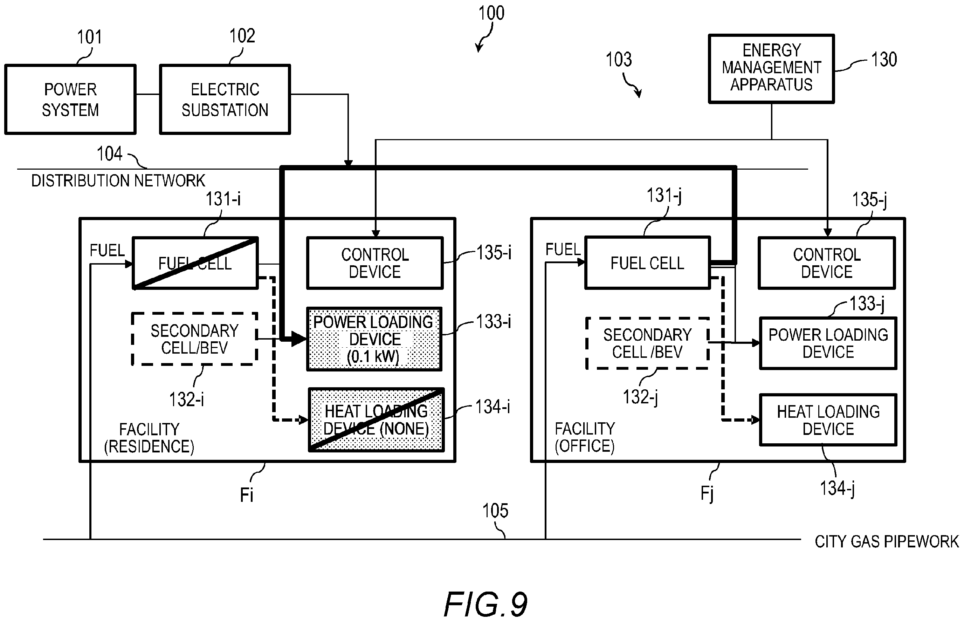

FIG. 9 is an explanatory diagram illustrating an operation example 5 of the energy management system 103. FIG. 9 is an operation example in which the operation of the fuel cell 131-i of the facility Fi (residence) in the residential area is completely stopped since a resident of the facility Fi is absent for a long time (> third predetermined time TH3). The energy management apparatus 130 instructs complete stop of the operation of the fuel cell 131-i to the control device 135-i upon application submitted from the resident of the facility Fi, for example. The complete stop includes stop of the operation of the fuel cell 131-i and stop of fuel supply to the fuel cell 131-i. On a fuel supply side of the fuel cell 131, an opening/closing valve, not shown, is provided, and the control device 135-i closes the opening/closing valve. As a result, heat supply to the heat loading device 134-i is also stopped, and when the heat supply is to be resumed, the opening/closing valve is opened. Here, the control in FIG. 8 and FIG. 9 will be described in detail by using FIG. 10.

FIG. 10 is a timing chart illustrating the operation of the fuel cell 131. The chart (A) is a timing chart illustrating the operation of the fuel cell 131-j which is a stop target in FIG. 8 and FIG. 9, and the chart (B) is a timing chart illustrating the operation of the fuel cell 131-i (alternative fuel cell) of another facility Fi which is an alternative for the fuel cell 131-j in FIG. 8. In the charts (A) and (B), lateral axes indicate time and vertical axes indicate temperatures.

A period [ta, tb] is a power-generation period. The power-generation period is a period during which the fuel cell 131 maintains a temperature capable of power generation (700°C, for example). Here, assuming that a period [tb, tc] is a power unneeded period A (≤ first predetermined time TH1) of the facility Fj, the fuel cell 131-j performs the heat-retaining operation. As a result, the temperature temporarily lowers as indicated by a dotted line, but the operation stop and restart of the fuel cell 131-j is not needed. In the power unneeded period, fuel supply is stopped, and the temperature of the fuel cell 131 lowers. Moreover, a period [tc, td] is also a power-generation period.

In the chart (A), assuming that a period [td, te] is a power unneeded period B (first predetermined time TH1 < B ≤ second predetermined time TH2) of the facility Fj, here, the operation of the fuel cell 131-j is stopped, and the temperature of the fuel cell 131-j lowers. And in compliance with the restart plan P2 of the energy management apparatus 130, the fuel cell 131 is restarted at time tx and the temperature reaches 700°C at the time te, for example. A period [te, tf] is a power-generation period. That is, the energy management apparatus 130 controls the control device 135-j for the operation stop of the fuel cell 131-j in the power unneeded period B and the restart of the fuel cell 131-j by the end of the power unneeded period B so that the temperature of the fuel cell 131-j reaches 700°C by the end of the power unneeded period B.

Moreover, assuming that a period [td, tf] is a power unneeded period C (second predetermined time TH2 < C ≤ third predetermined time TH3) of the facility Fj, the operation of the fuel cell 131-j is stopped, and the temperature of the fuel cell 131-j lowers. In this case, the energy management apparatus 130 draws up the restart plan P3 within a range in which restart is possible with the residual heat of the fuel cell 131-j.

Assuming that a temperature Tx is a temperature within the range in which restart is possible with the residual heat of the fuel cell 131-j, the energy management apparatus 130 draws up the restart plan P3 of the fuel cell 131-j at the time tx and after, for example. As a result, even during the power unneeded period C of the facility Fj, the temperature of the fuel cell 131-j reaches 700°C at the time te. Therefore, the period [te, tf] is a power-generation period. That is, the energy management apparatus 130 controls the control device 135-j for the operation stop of the fuel cell 131-j in the power unneeded period B and the restart of the fuel cell 131-j by the end of the power unneeded period C so that the temperature of the fuel cell 131-j reaches 700°C by the end of the power unneeded period C.

Moreover, the energy management apparatus 130 selects the fuel cell 131-i of the facility Fi as an alternative for stopped device so that the fuel cell 131-i of the facility Fi provides power to the facility Fj in the power unneeded period C. As a result, power is supplied to the power loading device 133 of the facility Fj in which the operation of the fuel cell 131-j was stopped from the fuel cell 131-i (alternative for stopped device). In this way, a power load is switched to the fuel cell 131-i of the facility Fi.

Moreover, there is a case where the facility Fi also enters the power unneeded period C in the period [td, tf]. In this case, if the operation of the fuel cell 131 is stopped in the facilities Fi and Fj in the same period [td, te], power is not generated in the whole area in the period [td, tf]. Thus, if the power unneeded periods C overlap, the energy management apparatus 130 alternately stops the operation of the fuel cell 131 so that periods in which the operation of the fuel cell 131 is stopped do not overlap as much as possible. For example, the energy management apparatus 130 draws up the restart plan P3 in which the operation of the fuel cell 131-j is stopped and restarted in the period [td, te] and has it executed by the control device 135-j and draws up a restart plan P4 in which the operation of the fuel cell 131-i is stopped and restarted in the period [te, tf] and has it executed by the control device 135-i.

And in the period [td, te], power is supplied from the fuel cell 131-i (alternative for stopped device) to the power loading device 133 of the facility Fj in which the operation of the fuel cell 131-j was stopped, while in the period [te, tf], power is supplied from the fuel cell 131-j (alternative for stopped device) to the power loading device 133 of the facility Fi in which the operation of the fuel cell 131-i was stopped. In this way, power can be interchanged in alternative shifts. Note that an alternative shift example of power loads between the two facilities Fi and Fj was described here, but it can be also realized among three or more facilities. In this case, it is only necessary that the operation stop periods of the mutual fuel cells 131 do not overlap between a power interchange source and a power interchange destination.

Note that the energy management apparatus 130 counts the number of operation stop times in the past for each of the fuel cells 131 and selects the fuel cell 131 to be an alternative for stopped device on the basis of the number of operation stop times in the past. Specifically, the energy management apparatus 130 selects the fuel cell 131 with the smallest number of operation stop times in the past as the alternative for stopped device. As a result, the specific fuel cell 131 is not selected for the alternative for stopped device in a concentrative manner any more, and deterioration of the fuel cell 131 can be suppressed.

Moreover, a period [tf, to] is assumed to be a power-generation period. The time to is assumed to be temperature-fall start time. A period at the time to and after is assumed to be a power unneeded period D (>third predetermined time TH3). In this case, the energy management apparatus 130 instructs the control device 135 to stop the operation of the fuel cell 131 in compliance with stop plans P5 and P6 from the energy management apparatus 130. When a temperature fall rate is controlled to be constant by the stop plan P5, a temperature $T_{st}$ of the fuel cell 131 is expressed by a formula (1) below.

$$T_{st} = \begin{cases} T_{hot} & (t < t_0) \\ T_{hot} - \Delta T(t - t_0) & (t_0 \le t \le t_{end}) \\ T_0 & (t_{end} < t) \end{cases} \quad \cdots (1)$$

$$t_{end} = t_0 + \frac{T_{hot} - T_0}{\Delta T} \quad \cdots (2)$$

In the formula (1), $t_{end}$ is a stop-completion time of the fuel cell 131, and it is expressed by a formula (2). $T_{hot}$ is a power-generation temperature of the fuel cell 131. $T_0$ is an outside temperature. $\Delta T$ is a temperature fall rate. On the other hand, at the operation stop of the fuel cell 131, if the heat is radiated naturally without temperature control by the stop plan P6, the temperature $T_{st}$ of the fuel cell 131 is expressed by a formula (3) below.

$$T_{st} = \begin{cases} T_{hot} & (t < t_0) \\ (T_{hot} - T_0)\exp(-\frac{t - t_0}{\tau}) + T_0 & (t_0 \le t) \end{cases} \quad \cdots (3)$$

$$\tau = \frac{C_p m_{st}}{U_{st} A_{st}} \quad \cdots (4)$$

In the formula (3), $\tau$ is a thermal time constant [second] and is expressed by a formula (4). In the formula (4), $C_p$ is a specific heat capacity [$Jkg^{-1}K^{-1}$]. $m_{st}$ is a mass [kg] of the fuel cell 131. $U_{st}$ is heat transfer coefficient [$Wm^{-2}K^{-1}$]. $A_{st}$ is a surface area [$m^2$] of a part of the fuel cell 131 in contact with the outside air. Note that, since the formula (3) is natural heat radiation, the stop-completion time $t_{end}$ is determined as appropriate by solving the formula (3) so that a temperature difference between the temperature $T_{st}$ of the fuel cell 131 and an outside air temperature $T_0$ is a sufficiently

small value ε [K].

<Energy Management Processing>

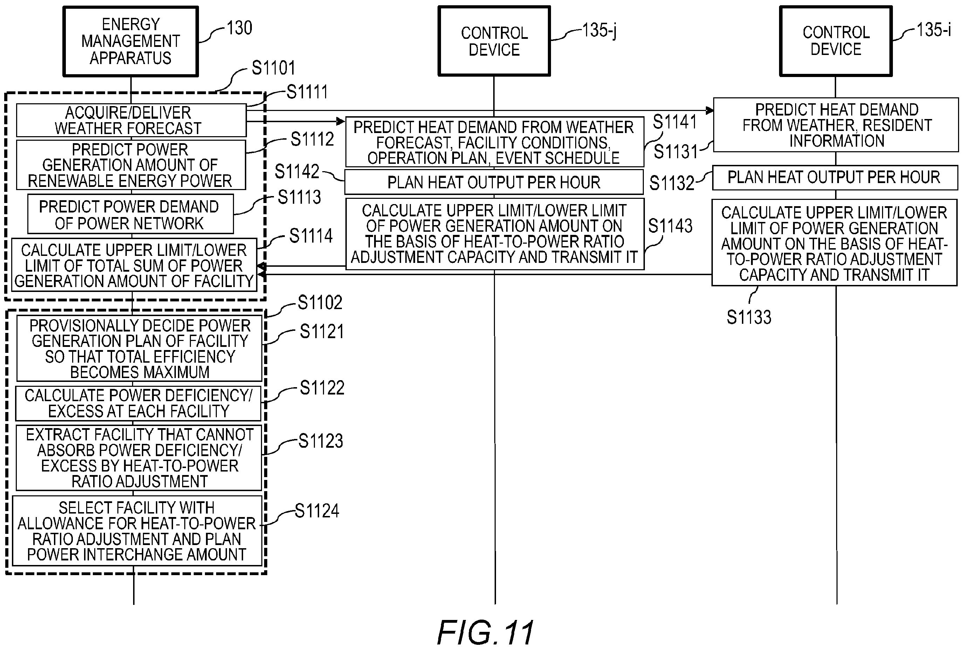

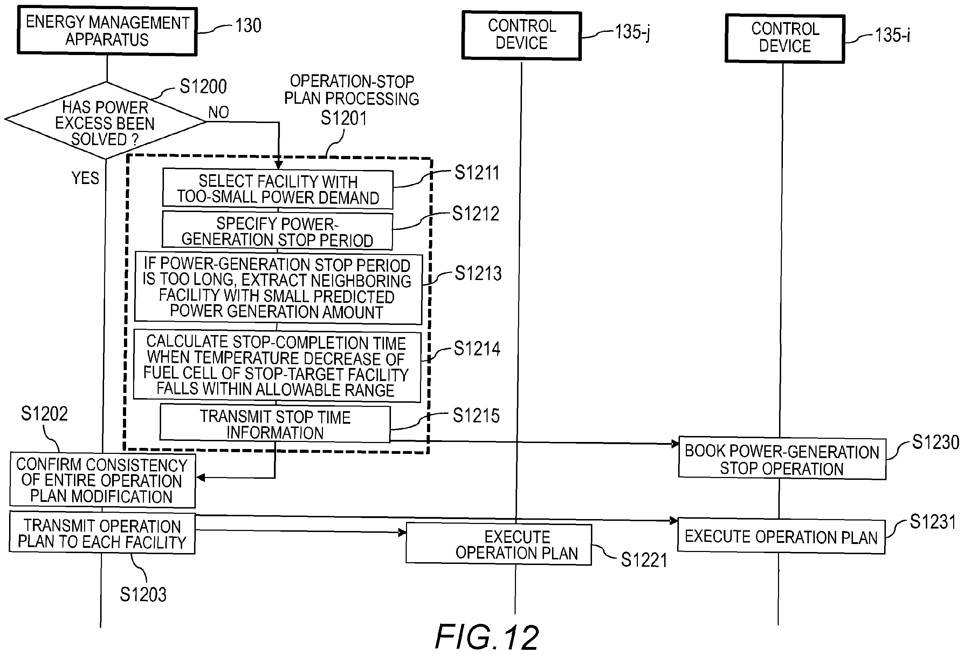

FIG. 11 is a flowchart (first half) illustrating an example of energy management processing procedure by the energy management system 103. The processing in FIG. 11 and FIG. 12, which will be described later, is executed once in 24 hours, for example. Specifically, it is executed on a day before a control target day, for example. However, at what timing the processing in FIG. 11 and FIG. 12, which will be described later, is to be executed or what date is to be set as the control target day can be arbitrarily set by an administrator using the energy management apparatus 130.

The energy management apparatus 130 executes power-generation capacity calculating processing (Step S1101) and an operation planning processing (Step S1102). The power-generation capacity calculating processing (Step S1101) and the operation planning processing (Step S1102) are processing that can be realized by existing arts.

First, in the power-generation capacity calculating processing (Step S1101), the energy management apparatus 130 acquires weather information from an outside weather site and delivers it to the control device 135 of the facilities Fi and Fj (Step S1111). Subsequently, the energy management apparatus 130 predicts a power generation amount of the renewable energy (solar photovoltaic energy or wind-power generation energy) (Step S1112), and predicts power demand of the entire distribution network 104 from the power system 101 as shown in FIG. 4 (Step S1113).

Moreover, the control device 135-i of the facility Fi receives the weather information on the following day delivered from the energy management apparatus 130 and, on the basis of the weather of the following day and resident information (information on how many persons are staying in the facility Fi in which time slot of the following day), predicts heat demand of the facility Fi on the following day (Step S1131). The resident information is assumed to be registered in the control device 135-i in advance. The control device 135-i of the facility Fi plans an hourly heat output of the fuel cell 131-i in the facility Fi on the following day (Step S1132), calculates an upper limit and a lower limit of the power generation amount of the fuel cell 131-i of the facility Fi on the following day on the basis of a heat-to-power ratio adjustment capacity specific to the fuel cell 131-i, and transmits them along with the heat demand and the heat output to the energy management apparatus 130 (Step S1133).

Moreover, the control device 135-j of the facility Fj receives the weather information on the following day delivered from the energy management apparatus 130 and predicts the heat demand of the facility Fj on the following day on the basis of the weather information on the following day, building thermal characteristics of the facility Fj, the operation plan of the facility Fj on the following day, and an event schedule in the facility Fj on the following day (Step S1141). The facility conditions, the operation plans, and the event schedules are supposed to be registered in the control device 135-j in advance.

The facility conditions include a thermal capacity and thermal resistance. The thermal capacity is data indicating how many megajoules of heat is needed to raise the room temperature of the facility F by one degree. The thermal resistance is a coefficient indicating how many megajoules of heat amount is emitted to the outside air along a wall from the facility F when a temperature difference between the temperature in the facility F and the outside air is 1 degree. The control device 135-j in the facility Fj plans the hourly heat output of the fuel cell 131-j in the facility Fj on the following day (Step S1132), calculates the upper limit and the lower limit of the power generation amount of the fuel cell 131-j of the facility Fj on the following day on the basis of the heat-to-power ratio adjustment capacity specific to the fuel cell 131-j, and transmits them along with the heat demand and the heat output to the energy management apparatus 130 (Step S1133).

The heat-to-power ratio adjustment capacity is a capacity specific to the fuel cell 131 for adjusting a ratio (heat-to-power ratio) between a heat generation amount and a power generation amount of the fuel cell 131. Specifically, for example, a setting pattern of the heat-to-power ratio is determined for each of the fuel cells 131, and the control device 135 can control the heat generation amount and the power generation amount by adjusting the heat-to-power ratio of the fuel cell 131.

In the power-generation capacity calculating processing (Step S1101), the energy management apparatus 130 calculates the upper limit and the lower limit of the total sum of the power generation amounts of the facilities Fi and Fj (Step S1114). As a result, the power-generation capacity calculating processing (Step S1101) ends.

Subsequently, the energy management apparatus 130 executes the operation planning processing (Step S1102). In the operation planning processing (Step S1102), the energy management apparatus 130 provisionally decides power-generation plans of the facilities Fi and Fj on the following day by solving an optimization problem such that total efficiency becomes the maximum by using the renewable energy power generation amount, the power demand of the distribution network 104 as illustrated in FIG. 3 and FIG. 4, and the upper limit and the lower limit of the total sum of the power generation amount of the fuel cell 131 of the facility F (Step S1121). This power-generation plan includes the restart plans P1 to P4 and the stop plans P5 and P6 as shown in FIG. 10.

The energy management apparatus 130 calculates power deficiency/excess of the facilities Fi and Fj on the following day on the basis of a difference between the provisionally decided power-generation plans of the facilities Fi and Fj on the following day, the upper limit and the lower limit of the power generation amounts of the fuel cells 131 of the facilities Fi and Fj on the following day (Step S1122).

Subsequently, the energy management apparatus 130 extracts the facility that cannot adjust the power deficiency/excess by the heat-to-power ratio adjustment (Step S1123). Specifically, for example, the energy management apparatus 130 extracts the facility F which excessively generates power even though the heat-to-power ratio adjustment of the fuel cell 131 is executed and the facility F which cannot solve the power deficiency even though the heat-to-power ratio adjustment is executed.

Subsequently, the energy management apparatus 130 selects the facility F which has extra capacity in the heat-to-power ratio adjustment and plans a power interchange amount (Step S1124). Specifically, for example, the energy management apparatus 130 selects the facility F whose power generation amount has increased by the heat-to-power ratio adjustment, though it was not extracted at Step S1123. Then, the energy management apparatus 130 draws up a power interchange plan showing how much power is to be provided on the following day to the facility F whose power deficiency is not solved at Step S1123 on the basis of the excessive power generation amount in the facility F whose power generation is excessive at Step S1123 and the facility F which has extra capacity for power generation at Step S1124. This power interchange plan includes charging of the secondary cell 132 of its own facility F if there is no facility F whose power deficiency is not solved. The power interchange plan is included in the power generation plan. As a result, the operation planning processing (Step S1102) ends.

FIG. 12 is a flowchart (second half) illustrating an example of the energy management processing procedure by the energy management system 103. The energy management apparatus 130 determines whether or not the power excess could be solved (Step S1200). Specifically, for example, if the power generation is still excessive even after at least the facility F with excessive power generation among the facilities F with excessive power generation and the facilities F having extra capacity for power generation provides power to the facility with power shortage, it means that the power excess has not been solved (Step S1200: No), while if the power generation is not excessive, the power excess has been solved (Step S1200: Yes). In the case of Step S1200: Yes, the processing proceeds to Step S1202 without executing the stop plan processing (Step S1201).

In the case of Step S1200: No, the energy management apparatus 130 executes the stop planning processing (Step S1201). In the stop planning processing (Step S1201), the energy management apparatus 130 selects the facility F with too-small power demand from the power-generation plan of the facility F provisionally decided at Step S1121 as the stop-target facility F (Step S1211). The facility F with too-small power demand is a facility having a power unneeded period in which the power demand on the following day is equal to or smaller than a predetermined power-demand threshold value.

Subsequently, the energy management apparatus 130 specifies a power-generation stop period of the stop-target facility F selected at Step S1211 (Step S1212). If the power unneeded period of the facility F with too-small power demand is equal to or less than the first predetermined time TH1, the power-generation stop period of the stop-target facility F is specified as a power unneeded period A. Therefore, the fuel cell 131-j performs heat-retaining operation.

Moreover, if the power unneeded period of the facility F with too-small power demand is longer than the first predetermined time TH1 and equal to or less than the second predetermined time TH2, the power-generation stop period of the stop-target facility F is specified as a power unneeded period B. Furthermore, if the power unneeded period of the facility F with too-small power demand is longer than the second predetermined time TH2 and equal to or less than the third predetermined time TH3, the power-generation stop period of the stop-target facility F is specified as a power unneeded period C including the power unneeded period B and a power-generation period E to supply power to another facility Fi. Furthermore, if the power unneeded period of the facility F with too-small power demand is larger than the third predetermined time TH3, Step S1213 is executed.

Subsequently, if the power-generation stop period specified at Step S1212 is too long (for example, if it is longer than the stop time predetermined by the third predetermined time TH3), the energy management apparatus 130 extracts a neighboring facility whose predicted power-generation amount on the following day is small (equal to or smaller than a predetermined predicted power-generation amount threshold value, for example) (Step S1213). Note that, the neighboring facility is a facility present within a predetermined distance from the stop-target facility F whose power-generation stop time specified at Step S1212 is too long, and whether it belongs to the same demand sector or to a different demand sector does not matter.

Subsequently, the energy management apparatus 130 calculates stop time at which the power-generation temperature falls of the fuel cells 131 of both the stop-target facility F and the neighboring facility F enter an allowable range only if the Step S1213 was executed (Step S1214). Specifically, for example, the energy management apparatus 130 calculates stop-completion time $t_{end}$ at which the fall of the power-generation temperature $T_{st}$ from the temperature-fall start time to enters the allowable range by the aforementioned formula (1). Moreover, the energy management apparatus 130 calculates the stop-completion time $t_{end}$ at which a normal temperature (20°C, for example) is reached due to the fall of the power-generation temperature $T_{st}$ from the temperature-fall start time to by the aforementioned formula (3).

Then, the energy management apparatus 130 transmits stop time information (power-generation stop period at Step S1212, stop-completion time at Step S1214) to the control device 135-i of the stop-target facility Fi as a stop plan (Step S1215). As a result, the control device 135-i of the stop-target facility Fi sets booking of the power-generation stop operation of the fuel cell 131 (Step S1230). As a result, the stop planning processing (Step S1201) ends.

After that, if the stop planning processing (Step S1201) is executed, the energy management apparatus 130 modifies the operation plan of each facility F so that an execution result of the stop planning processing (Step S1201) is satisfied and confirms consistency (Step S1202). The operation plan includes at least the power-generation plan in the power-generation plan and the stop plan.

Then, the energy management apparatus 130 transmits the operation plan of the fuel cell 131 to each facility F (Step S1203). As a result, the control devices 135-i and 135-j of the facilities Fi and Fj execute the received operation plans and cause the fuel cells 131 to generate power and heat.

As described above, the energy management system 103 according to this embodiment can, in a configuration where a plurality of the fuel cells 131 and the power loading devices 133 (or the secondary cells 132) are present under the distribution network 104, supply power to the power loading device 133 in another demand sector under such a situation that the power loading device 133 of the facility F in one demand sector is reduced and charge the secondary cell 132. In a state where stop is inevitable by all means, frequent stop or restart of the fuel cell 131 can be avoided by alternately stopping heat supply to the fuel cell 131.

Moreover, the energy management apparatus 130 may execute control by regarding a facility group (site) consisting of a plurality of facilities concentrated in a district and connected by hot-water piping and steam piping as one facility, for example. For example, a public facility or a college campus consisting of a plurality of building, a building group in a central city such as an area around a station, apartment houses and the like are regarded as a site and one facility and controlled.

As described above, according to this embodiment, an operation state which could easily deteriorate the fuel cell 131 such as frequent start/stop of the fuel cell 131, a long-time operation with a high load and the like can be avoided by appropriate operation control or operation control by linkage of a plurality of fuel cells 131, for example. Moreover, by suppressing frequent start/stop and restart of the fuel cell 131, load fluctuation of the fuel cell 131 is reduced, and electrode deterioration or heat shock by rapid heating of the fuel cell 131 can be avoided.

It should be noted that this disclosure is not limited to the above-mentioned embodiments, and encompasses various modification examples and the equivalent configurations within the scope of the appended claims without departing from the gist of this disclosure. For example, the above-mentioned embodiments are described in detail for a better understanding of this disclosure, and this disclosure is not necessarily limited to what includes all the configurations that have been described. Further, a part of the configurations according to a given embodiment may be replaced by the configurations according to another embodiment. Further, the configurations according to another embodiment may be added to the configurations according to a given embodiment. Further, a part of the configurations according to each embodiment may be added to, deleted from, or replaced by another configuration.

Further, a part or entirety of the respective configurations, functions, processing modules, processing means, and the like that have been described may be implemented by hardware, for example, may be designed as an integrated circuit, or may be implemented by software by a processor interpreting and executing programs for implementing the respective functions.

The information on the programs, tables, files, and the like for implementing the respective functions can be stored in a storage device such as a memory, a hard disk drive, or a solid state drive (SSD) or a recording medium such as an IC card, an SD card, or a DVD.

Further, control lines and information lines that are assumed to be necessary for the sake of description are described, but not all the control lines and information lines that are necessary in terms of implementation are described. It may be considered that almost all the components are connected to one another in actuality.

**Claims**

1. An energy management apparatus configured to manage energy of a plurality of facilities, having a processor configured to execute a program and a storage device configured to store the program and capable of accessing a control device configured to control a cogeneration device which supplies power to a power loading device in each of the plurality of facilities and supplies heat to a heat loading device in the facility,
wherein the processor is configured to:

   acquire a power-generation plan based on time-series power demand in each of the facilities and a time-series power-generation amount of the cogeneration device; and
   control the control device of a first facility so that at least one of stop of the cogeneration device of the first facility in the plurality of facilities, charging of a secondary cell in the first facility, and power supply to the power loading device of a second facility in the plurality of facilities from the cogeneration device of the first facility is performed during a control target period on the basis of the power-generation plan.

2. The energy management apparatus according to claim 1,
wherein the processor is configured to:
control the control device of the first facility so that power supply from the cogeneration device of the first facility to the power loading device of the second facility is performed during the control target period, in a case where the first facility is in a power excess state during the control target period on the basis of the power-generation plan of the first facility, and the second facility is in a power shortage state during the control target period on the basis of the power-generation plan of the second facility.

3. The energy management apparatus according to claim 1,
wherein the processor is configured to:
control the control device of the first facility so that charging of the secondary cell in the first facility is performed during the control target period, in a case where the first facility is in the power excess state during the control target period on the basis of the power-generation plan of the first facility, and the second facility is not in the power shortage state during the control target period on the basis of the power-generation plan of the second facility.

4. The energy management apparatus according to claim 1,
wherein the processor is configured to:
control the control device of the first facility so that charging of the secondary cell in the first cell is performed during the control target period and controls the control device of the second facility so that charging of the secondary cell in the second facility is performed during the control target period, in a case where the first facility is in the power excess state during the control target period on the basis of the power-generation plan of the first facility, and the second facility is in the power excess state during the control target period on the basis of the power-generation plan of the second facility.

5. The energy management apparatus according to claim 1,
wherein the processor is configured to:
specify a power unneeded period during which the first facility enters a state where the power-generation amount becomes equal to or smaller than a predetermined power-generation amount during the control target period on the basis of the power-generation plan of the first facility and control the control device of the first facility so that stop of the cogeneration device of the first facility is performed during the power unneeded period.

6. The energy management apparatus according to claim 5,
wherein the processor is configured to:
control the control device of the first facility so that power-generation stop of the cogeneration device of the first facility during the power unneeded period is performed, in a case where the power unneeded period is equal to or less than a first predetermined time.

7. The energy management apparatus according to claim 5,
wherein the processor is configured to:
control the control device of the first facility so that operation stop of the cogeneration device of the first facility during the power unneeded period and restart of the cogeneration device of the first facility into a power-generation state by the end of the power unneeded period are performed, in a case where the power unneeded period is longer than the first predetermined time and equal to or less than a second predetermined time.

8. The energy management apparatus according to claim 5,
wherein the processor is configured to:
control the control device of the first facility so that the operation stop of the cogeneration device and fuel-supply stop to the cogeneration device of the first facility during the power unneeded period and restart of the fuel supply to the cogeneration device of the first facility first facility into the power-generation state by the end of the power unneeded period are performed, in a case where the power unneeded period is longer than the second predetermined time, which is longer than the first predetermined time, and equal to or less than a third predetermined time.

9. The energy management apparatus according to claim 8,
wherein the processor is configured to:

control the control device of the second facility so that power supply from the cogeneration device of the second facility to the power loading device of the first facility is performed during the power unneeded period, in a case where the second facility is in the power excess state during the control target period on the basis of the power-generation plan of the second facility.

10. The energy management apparatus according to claim 5,
wherein the processor is configured to:
control the control device of the first facility so that the operation stop of the cogeneration device and fuel-supply stop to the cogeneration device of the first facility during the power unneeded period is performed, in a case where the power unneeded period is longer than the third predetermined time.

11. An energy management system having an energy management apparatus configured to manage energy of a plurality of facilities and a control device configured to control a cogeneration device which supplies power to a power loading device in each of the plurality of facilities and supplies heat to a heat loading device in the facility,
wherein the energy management apparatus is configured to:

acquire a power-generation plan based on time-series power demand in each of the facilities and a time-series power-generation amount of the cogeneration device; and
control the control device of a first facility so that at least one of stop of the cogeneration device of the first facility in the plurality of facilities, charging of a secondary cell in the first facility, and power supply to the power loading device of a second facility in the plurality of facilities from the cogeneration device of the first facility is performed during a control target period on the basis of the power-generation plan.

12. An energy management method by an energy management apparatus which manages energy of a plurality of facilities,

wherein the energy management apparatus has a processor which executes a program and a storage device which stores the program and is capable of accessing a control device which controls a cogeneration device which supplies power to a power loading device in each of the plurality of facilities and supplies heat to a heat loading device in the facility; and
the processor acquires a power-generation plan based on time-series power demand and a time-series power-generation amount of the cogeneration device in each of the facilities; and
controls the control device of the first facility so that at least one of stop of the cogeneration device of the first facility in the plurality of facilities, charging of the secondary cell in the first facility, and power supply from the cogeneration device of the first facility to the power loading device of a second facility in the plurality of facilities is performed during a control target period on the basis of the power-generation plan.

*FIG.1*

FIG.2

*FIG.3*

FIG.4

*FIG.5*

*FIG.6*

EP 4 096 044 A1

*FIG.7*

*FIG.8*

*FIG.9*

FIG.10

FIG.11

```
┌─────────────────────┐              ┌─────────────┐              ┌─────────────┐
│ ENERGY MANAGEMENT   │─130          │  CONTROL    │─135-j        │  CONTROL    │─135-i
│     APPARATUS       │              │   DEVICE    │              │   DEVICE    │
└─────────────────────┘              └─────────────┘              └─────────────┘
```

               S1200          OPERATION-STOP
             ◇ HAS POWER      PLAN PROCESSING
               EXCESS BEEN    S1201
               SOLVED ?  NO

         YES

                    ┌─────────────────────────────┐
                    │  SELECT FACILITY WITH        │─S1211
                    │  TOO-SMALL POWER DEMAND      │
                    ├─────────────────────────────┤
                    │  SPECIFY POWER-             │─S1212
                    │  GENERATION STOP PERIOD      │
                    ├─────────────────────────────┤
                    │  IF POWER-GENERATION STOP    │─S1213
                    │  PERIOD IS TOO LONG, EXTRACT │
                    │  NEIGHBORING FACILITY WITH   │
                    │  SMALL PREDICTED POWER       │
                    │  GENERATION AMOUNT           │
                    ├─────────────────────────────┤
                    │  CALCULATE STOP-COMPLETION   │─S1214
                    │  TIME WHEN TEMPERATURE       │
                    │  DECREASE OF FUEL CELL OF    │
                    │  STOP-TARGET FACILITY FALLS  │
                    │  WITHIN ALLOWABLE RANGE      │
                    ├─────────────────────────────┤
                    │  TRANSMIT STOP TIME          │─S1215
                    │  INFORMATION                 │
                    └─────────────────────────────┘

S1202                                              ┌──────────────────────────┐
┌──────────────────────┐                           │ BOOK POWER-GENERATION    │─S1230
│ CONFIRM CONSISTENCY  │                           │ STOP OPERATION           │
│ OF ENTIRE OPERATION  │                           └──────────────────────────┘
│ PLAN MODIFICATION    │
└──────────────────────┘
┌──────────────────────┐        ┌──────────────────┐   ┌──────────────────────┐
│ TRANSMIT OPERATION   │        │    EXECUTE       │   │ EXECUTE OPERATION    │─S1231
│ PLAN TO EACH FACILITY│───────▶│ OPERATION PLAN   │   │ PLAN                 │
└──────────────────────┘        └──────────────────┘   └──────────────────────┘
                                          S1221
       S1203

*FIG.12*

EP 4 096 044 A1

**EUROPEAN SEARCH REPORT**

Application Number

EP 22 16 1821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 509 184 A1 (KYOCERA CORP [JP]) 10 July 2019 (2019-07-10) * abstract; figures * * paragraphs [0030] – [0075] * ----- | 1-12 | INV. H02J3/06 H02J3/38 H02J3/48 H02J3/46 |
| A | US 2019/148745 A1 (AIKAWA SHINJI [JP] ET AL) 16 May 2019 (2019-05-16) * abstract; figures * ----- | 1,11,12 | H02J3/00 G05B15/02 H01M8/04298 |
|  |  |  | ADD. H02J3/32 |

TECHNICAL FIELDS SEARCHED (IPC)

H02J
H01M

The present search report has been drawn up for all claims

| Place of search | Date of completion of the search | Examiner |
|---|---|---|
| Munich | 30 August 2022 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 1821

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2022

| Patent document cited in search report | | Publication date | Patent family member(s) | | Publication date |
|---|---|---|---|---|---|
| EP 3509184 | A1 | 10-07-2019 | EP | 3509184 A1 | 10-07-2019 |
| | | | JP | WO2018043662 A1 | 24-06-2019 |
| | | | US | 2019199131 A1 | 27-06-2019 |
| | | | WO | 2018043662 A1 | 08-03-2018 |
| US 2019148745 | A1 | 16-05-2019 | EP | 3477753 A1 | 01-05-2019 |
| | | | JP | 6839186 B2 | 03-03-2021 |
| | | | JP | WO2018003890 A1 | 25-04-2019 |
| | | | US | 2019148745 A1 | 16-05-2019 |
| | | | WO | 2018003890 A1 | 04-01-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021090318 A
- JP 2018042420 A
- JP 2002070647 A
- JP 2015103275 A